## Europäisches Patentamt
## European Patent Office
## Office européen des brevets

(19)

(11) Veröffentlichungsnummer: **0 035 150**
**B1**

(12) **EUROPÄISCHE PATENTSCHRIFT**

(45) Veröffentlichungstag der Patentschrift:
21.11.84

(51) Int. Cl.³: **H 02 P 13/18**

(21) Anmeldenummer: **81101043.8**

(22) Anmeldetag: **14.02.81**

(54) **Verfahren und Anordnung zur Erzeugung eines Dreiphasendrehstromes durch Wechselrichten.**

(30) Priorität: **29.02.80 DE 3007629**

(43) Veröffentlichungstag der Anmeldung:
**09.09.81 Patentblatt 81/36**

(45) Bekanntmachung des Hinweises auf die Patenterteilung:
**21.11.84 Patentblatt 84/47**

(84) Benannte Vertragsstaaten:
**AT BE CH DE FR GB IT LI NL SE**

(56) Entgegenhaltungen:
**US - A - 3 725 767**

(73) Patentinhaber: **International Standard Electric Corporation, 320 Park Avenue, New York New York 10022 (US)**

(84) Benannte Vertragsstaaten: **BE CH FR GB IT LI NL SE AT**

(73) Patentinhaber: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Reiber, Hans, Holzhauser Strasse 32, D-7000 Stuttgart 80 (DE)**

(74) Vertreter: **Graf, Georg Hugo, Dipl.-Ing. et al, c/o Standard Elektrik Lorenz AG Patent- und Lizenzwesen Postfach 300 929 Kurze Strasse 8, D-7000 Stuttgart 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Erzeugung einer Dreiphasenspannung durch Wechselrichten aus einer Gleichspannungsquelle, bei dem mit einer Phasenverschiebung einer Drittelperiode nacheinander jede der drei Phasen während eines Sechstelperiodenabschnittes abwechselnd an einen der beiden Pole der Gleichspannungsquelle angelegt wird und daß während dieser Zeit die anderen beiden Phasen gegenüber diesem Pol als Bezugspunkt einen um 60 Grad gegeneinander verschobenen sinusförmigen Spannungsverlauf aufweisen, wobei jeweils eine der sich gegenüber dem jeweiligen festen Bezugspunkt ändernden sinusförmigen Spannungen vom halben Amplitudenwert ausgehend bis zum vollen Amplitudenwert zunimmt, während die andere Spannung vom vollen Amplitudenwert ausgehend bis zum halben Amplitudenwert abnimmt.

Ein solches Verfahren ist bekannt (US-A 3 725 767). Bei dem bekannten Verfahren kann man die Spannung zwischen zwei Phasenspannungen einer Dreiphasenspannung nur mit der Zwischenkreisspannung (Gleichspannung) steuern. Dazu sind aufwendige Schaltungen oder Maßnahmen erforderlich.

Ein nach dem Verfahren erzeugter Dreiphasendrehstrom findet bevorzugt Anwendung bei mit veränderlicher Frequenz betriebenen Drehstrominduktionsmotoren, deren vorteilhaftes Verhalten bei einer derartigen Betriebsweise beispielsweise in »AEG-Mitteilungen 55 (1965) 2, Seite 118—123«; dargelegt ist.

Die Erzeugung von Wechselspannungen veränderlicher Frequenz mit Wechselrichtern ist auch in »AEG-Mitteilung 54 (1964) 1/2, Seite 89—106« beschrieben. In dieser Veröffentlichung ist auch ausgeführt, daß durch Pulsbreitenmodulation des Wechselrichters ein praktisch sinusförmiger Stromverlauf in einem Verbraucher mit induktiver Komponente, wie einem Induktionsmotor, erreicht werden kann. Um diesen häufig gewünschten sinusförmigen Stromverlauf zu erreichen, werden gegenüber den Polen der Gleichspannungsquelle sinusförmige, bei Pulsbreitenmodulation im Mittelwert sinusförmige, Wechselspannungen erzeugt, deren dann wiederum sinusförmige Differenz im Induktionsmotor wirkt und deren maximale Höhe durch die Spannung der Gleichspannungsquelle begrenzt ist.

Der Erfindung liegt die Aufgabe zugrunde, das bekannte Verfahren in der Weise weiter zu entwickeln, daß durch die Verwendung von nur sechs elektronischen Schaltern ein Wechselrichter mit Amplitudensteuerung verwirklicht werden kann.

Diese Aufgabe ist erfindungsgemäß dadurch gelöst, daß zur Verringerung der Wechselspannungsamplitude der genannte Amplitudenwert auf Werte unterhalb der Spannung der Gleichspannungsquelle gesteuert wird.

Bei dem erfindungsgemäßen Verfahren ergibt sich eine erhebliche Einsparung des Schaltungsaufwandes.

Die Erfindung ist nachstehend anhand der Fig. 1 bis 4 näher erläutert. Es zeigt

Fig. 1 den Verlauf der drei auf die Potentiale der Gleichspannungsquelle bezogenen erzeugten Wechselspannungen,

Fig. 2 den Verlauf der der Spannung UR aus Fig. 1 entsprechenden Wechselspannung mit einem Faktor A kleiner als Eins,

Fig. 3 schematisiert die wesentlichen Teile eines Wechselrichters für das erfindungsgemäße Verfahren,

Fig. 4 beispielhafte Einzelheiten eines Wechselrichters nach Fig. 3.

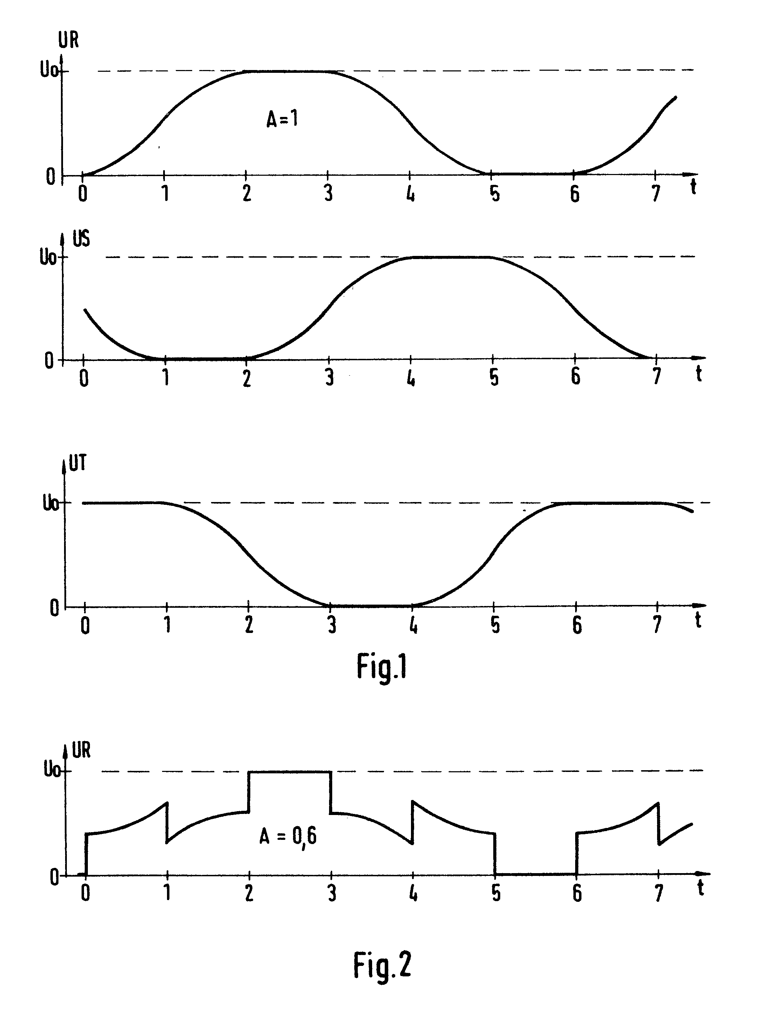

Fig. 1 zeigt den Verlauf der drei erfindungsgemäß erzeugten Wechselspannungen, die entsprechend der in Drehstromnetzen üblichen Bezeichnungen R, S, T mit UR, US, UT bezeichnet sind und gegeneinander eine Phasenverschiebung von jeweils einem Drittel einer Periode aufweisen. Auf der Abszisse sind die Verläufe der Wechselspannungen in Sechstelperiodenabschnitte eingeteilt, so daß beispielsweise von 0 bis 6 eine Periode aufgetragen ist. Als Maximalwert erreichen die Wechselspannungen die Spannung Uo, welche gleich der Spannung der wechselzurichtenden Gleichspannungsquelle ist und sinken als Minimalwert bis auf Null ab und nehmen dabei das mit 0 bezeichnete negative Potential der Gleichspannungsquelle ein. Die Wechselspannungen folgen dabei am Beispiel von UT aufgezeigt folgenden Funktionen in den dazu auf der Abszisse angegebenen Periodenabschnitten.

Abschnitt 0—1: $UT = Uo$
1—2: $UT = Uo \times A \times \sin[\omega t]$ wobei sich $\omega t$ von Punkt 1 bis Punkt 2 von 90 auf 150 Grad verändert
2—3: $UT = Uo \times (1\text{-}A \times \sin[\omega t])$ für $\omega t$ von 30 bis 90 Grad
3—4: $UT = 0$
4—5: $UT = Uo \times (1\text{-}A \times \sin[\omega t])$ für $\omega t$ von 90 bis 150 Grad
5—6: $UT = Uo \times A \times \sin[\omega t]$ für $\omega t$ von 30 bis 90 Grad
6—7: entspricht wieder Abschnitt 0—1, womit sich der Kurvenverlauf zu wiederholen beginnt.

Die Wechselspannungsverläufe von UR und US unterscheiden sich gegenüber UT nur durch eine zeitliche Verschiebung um zwei Sechstelperiodenabschnitte. Man erkennt auch, daß in jedem Sechstelperiodenabschnitt der Sinusfunktionsverlauf der beiden nicht auf einem Gleichspannungspotential liegenden Wechselspannungen eine gegenseitige Phasenverschiebung um 60 Grad aufweist.

Die Tatsache gestattet auch die zum Verständnis der Erfindung förderliche Hilfsvorstellung, daß bei Darstellung der drei Wechselspannungen in einem für Drehstromnetze gebräuchlichen Vektordreieck für jeweils eine Sechstelperiode eine Ecke des Dreiecks auf einem Potential festgehalten wird, während die beiden durch die an diese Ecken angrenzenden Seiten gebildeten Vektoren eine gegenseitige Phasenverschiebung um 60 Grad aufweisen.

Der Amplitudenfaktor A beträgt in dem Ausführungsbeispiel nach Fig. 1 eins. Als Differenz zweier gezeigter Wechselspannungen erhält man eine Spannung sinusförmigen Verlaufs, wie sich anhand bekannter trigonometrischer Umformungen nachweisen läßt.

Möchte man die Amplitude der Differenzspannungen verringern, so läßt sich dies durch eine mit verringerter Gleichspannung erzeugte geringere Amplitude und mit gleichbleibender Charakteristik der nach Fig. 1 erzeugten Wechselspannungen erreichen. Dies hat jedoch den Nachteil, daß die Gleichspannung verändert werden muß. Diesen Nachteil vermeidet ein Kurvenverlauf nach Fig. 2, gezeigt am Beispiel der Spannung UR, der denen bei der Beschreibung der Wechselspannungen nach Fig. 1 angegebenen Funktionsverläufen folgt, jedoch einen Amplitudenfaktor A kleiner als eins aufweist. Um diesen Kurvenverlauf zu erhalten, brauchen nur diejenigen Sechstelperiodenabschnitte in ihrer Amplitude verändert zu werden, die bereits innerhalb des Periodenabschnittes eines sich verändernden Funktionswert aufweisen. Werden alle drei Wechselspannungen UR, US, UT gleichermaßen entsprechend Fig. 2 erzeugt, so ergeben sich wieder sinusförmige Differenzspannungen mit einer entsprechend dem kleineren Amplitudenfaktor A verringerten Amplitude.

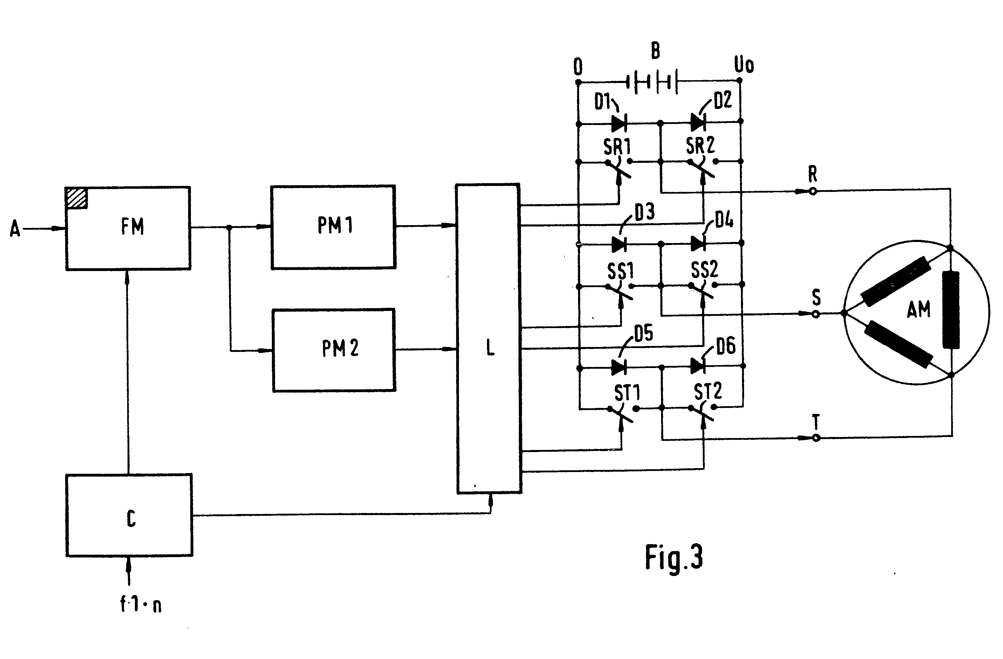

Fig. 3 zeigt ein Ausführungsbeispiel für einen Wechselrichter, dessen steuerbare Elemente SR1, SR2, SS1, SS2, ST1 und ST2 als durch pulsbreitenmodulierte Signale betätigte Schalter ausgeführt sind, denen jweils eine der Dioden D1 bis D6 parallel geschaltet ist. Die drei Wechselspannungsausgänge R, S, T sind dabei über je einen der genannten Schalter mit den Polen O und Uo der Gleichspannungsquelle B verbunden. An die Wechselspannungsausgänge R, S, T sind die hier im Dreieck geschalteten Wicklungen eines Asynchrondrehstrommotors AM angeschaltet, in denen die Differenzspannungen der Wechselspannungsausgänge R, S, T wirken.

Die Steuerung der genannten Schalter SR1 bis ST2 erfolgt durch einen Steuerteil C in Verbindung mit den in einem digitalen Funktionswertspeicher FM abgelegten Funktionswerten, die in Pulsbreitenmodulatoren PM1 und PM2 in zum Steuern der Schalter SR1 bis ST2 geeignete Signale gewandelt und über eine Zuordnungslogik L an die jeweils zu betätigenden Schalter weitergeleitet werden.

Die Pulsbreitenmodulation der Spannungen an den Wechselspannungsausgängen R, S, T wird dabei so gewählt, daß sich als Mittelwert die in Fig. 1 gezeigten Spannungsverläufe ergeben. Durch die Tiefpaßwirkung der Motorinduktivitäten bildet sich dann angenähert ein den Differenzspannungen der Spannungen nach Fig. 1 entsprechender sinusförmiger Strom im Motor AM aus.

Im digitalen Speicher FM sind zahlreiche Funktionswerte der Funktion $\sin(\alpha)$ in äquidistanten Argumentschritten von 30 bis 90 Grad abgelegt. Schrittweise wird mit dem Ablauf einer jeden Sechstelperiode der Wechselspannung ein Funktionswert nach dem anderen, beginnend mit Werten für 30 Grad und endend mit Werten für 90 Grad an den Pulsbreitenmodulator PM1 und umgekehrt beginnend mit Werten für 90 Grad und endend mit Werten für 30 Grad, an den Pulsbreitenmodulator PM2 in gleichzeitigen oder wechselweisen Schritten abgegeben. Durch entsprechende Zuordnung der Ausgangssignale der Pulsbreitenmodulatoren PM1 und PM2 zu den Schaltern SR1 bis ST2 werden die geforderten Spannungsverläufe an den Ausgängen R, S, T erzielt. Diese Zuordnung erfolgt unter Steuerung durch den Steuerteil C durch die zwischen den Pulsbreitenmodulatoren und den Schaltern angeordnete Zuordnungsschaltung L.

Da im Speicher FM Funktionswerte für verschiedene Amplitudenwerte A abgelegt sind, werden durch Adressierung des Speichers mit dem Signal A die zu dem Amplitudenwert gehörigen Funktionswerte zum Auslesen gebracht.

Dem Steuerteil C wird ein Taktsignal f1 × n zugeführt, wobei f1 der geforderten Frequenz der Wechselspannungen an den Ausgängen R, S, T entspricht und n die Zahl der Funktionswertschritte oder ein Vielfaches davon während einer Periode bedeutet.

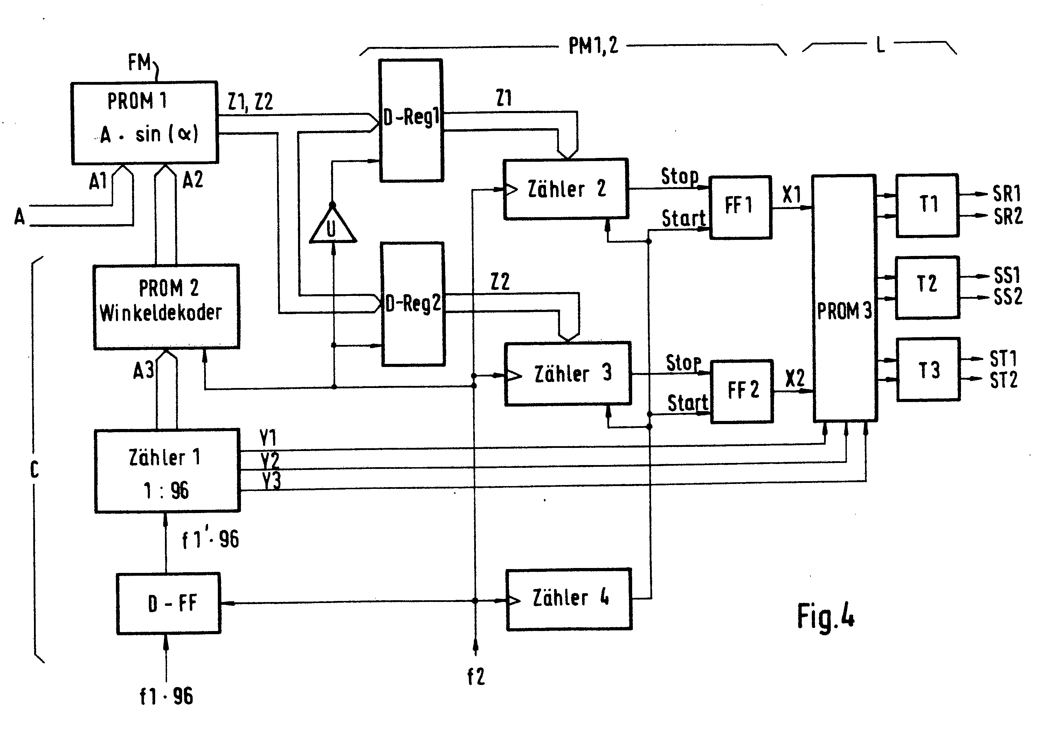

Fig. 4 zeigt beispielhafte Einzelheiten zu dem Ausführungsbeispiel nach Fig. 3. Dem digitalen Festwertspeicher FM mit der Bezeichnung PROM1 werden zum Auslesen der Funktionswerte Z1, Z2 zwei Adressen A1 und A2 zugeführt. Die Adresse A1 wählt die zu einem bestimmten Amplitudenwert A zugehörigen Funktionswerte und die Adresse A2 wählt unter diesen Funktionswerten den zu einem bestimmten Argument zugehörigen aus. Die Adresse A2 wird durch den Steuerteil C erzeugt, der sich hier aus einem Winkeldekoder PROM2, einem Zähler 1, einer bistabilen Kippstufe D-FF, einem Zähler 4 und einer Umkehrstufe U zusammensetzt. Dem Steuerteil wird erstens das Frequenzsignal f1 mit der Frequenz der zu erzeugenden Wechselspannungen multipliziert mit dem hier beispielhaft gegebenen Faktor n = 96 und zweitens ein Systemtakt f2 mit einer um ein Vielfaches höheren Frequenz als f1 × 96 zugeführt. Diese beiden Frequenzsignale f1 × 96 und f2 sind unabhängig und daher asynchron und in der bistabilen Kippstufe D-FF werden die Flanken des Frequenzsignales f1 × 96 auf die Flanken des Systemtaktes synchronisiert und dadurch das Frequenzsignal f1' × 96 gewonnen. Dieses Frequenzsignal f1' × 96 wird einem Zähler 1 zugeführt, der dieses durch den Faktor n = 96 teilt, so daß sich sein Zählergebnis periodisch mit der Frequenz f1, entsprechend 360 Grad wiederholt und dabei ständig sein jeweiliges Zählergebnis als Adressen Y1, Y2, Y3 und A3 in Binärcode abgibt.

Durch den Faktor n = 96 erhält man mit den drei höchstwertigen Bits Y1, Y2 und Y3 eine Adressierung in 60 Grad Schritten. Die sich beim Faktor n = 96 ergebenden weiteren niedrigwertigeren Bits (Bit 4—7) werden innerhalb der 60 Grad Schritte zur Adressierung der jeweiligen Funktionswerte dem Winkeldekoder PROM2 zugeführt, der im Takte f2 jeweils zwei Adressen A2 jeder Adresse A3 zuordnet, derart daß für jede Adresse A3 die Funktionswerte $Z1 = A \times sin (30° + \alpha)$ und $Z2 = A \times sin (90° - \alpha)$ aus dem Funktionswertspeicher FM im Takte von f2 ausgelesen werden. Der Systemtakt f2 bewirkt auch, daß die Funktionswerte Z1 und Z2 jeweils folgerichtig in die Zwischenspeicher D-Reg 1 und D-Reg 2 übernommen werden, indem der Systemtakt f2 D-Reg 1 über die Umkehrstufe U invertiert zugeführt wird. Der Zwischenspeicher D-Reg 1 formt dabei mit dem Zähler 2 und einer bistabilen Kippstufe FF1 einen ersten Pulsbreitenmodulator PM1 und D-Reg 2, Zähler 3 und Kippstufe FF2 formen einen zweiten Pulsbreitenmodulator PM2. Die Zähler 2 und 3 werden durch die an ihnen anliegenden Funktionswerte Z1 beziehungsweise Z2 in ihrem Zählwert programmiert und zählen dabei Takte des Systemtaktes f2. Der Zähler 4 des Steuerteils teilt den Systemtakt f2 durch den größten möglichen Zählwert der Zähler 2 und 3. Dieses Ausgangssignal »Start« des Zählers 4 startet die Zähler 2 und 3 und bringt die Kippstufen FF1 und FF2 in eine erste definierte Stellung. Nach erreichen des programmierten Zählwertes geben die Zähler 2 und 3 ein »Stop«-signal ab, welches die Kippstufen FF1 und FF2 in ihre zweite Stellung bringt. Die Zeit zwischen dem »Start« und dem »Stop«-signal ist ein Maß für die Pulsbreite und kann am Ausgang der Kippstufen FF1 und FF2 als Pulssignal X1 und X2 abgenommen werden. Diese Pulssignale X1 und X2 werden über eine Zuordnungslogik PROM3 und über die Treiberstufen T1, T2, T3 zum Steuern der Schalter SR1 bis ST2 des Wechselrichters verwendet.

Zuordnungslogik PROM3 und Treiberstufen T1, T2, T3 bilden dabei die in Fig. 3 gezeigte Zuordnungslogik L. Die Steuerung der Zuordnungslogik PROM3 erfolgt durch die vom Zähler 1 gebildete Adresse Y1 bis Y3. Diese Adresse ändert sich, bezogen auf die Periode von f1, in 60 Grad Schritten.

**Patentansprüche**

1. Verfahren zur Erzeugung einer Dreiphasenspannung durch Wechselrichten aus einer Gleichspannungsquelle, bei dem mit einer Phasenverschiebung einer Drittelperiode nacheinander jede der drei Phasen während eines Sechstelperiodenabschnittes abwechselnd an einen der beiden Pole der Gleichspannungsquelle angelegt wird und daß während dieser Zeit die anderen beiden Phasen gegenüber diesem Pol als Bezugspunkt einen um 60 Grad gegeneinander verschobenen sinusförmigen Spannungsverlauf aufweisen, wobei jeweils eine der sich gegenüber dem jeweiligen festen Bezugspunkt ändernden sinusförmigen Spannungen vom halben Amplitudenwert ausgehend bis zum vollen Amplitudenwert zunimmt, während die andere Spannung vom vollen Amplitudenwert ausgehend bis zum halben Amplitudenwert abnimmt, dadurch gekennzeichnet, daß zur Verringerung der Wechselspannungsamplitude der genannte Amplitudenwert auf Werte unterhalb der Spannung der Gleichspannungsquelle gesteuert wird.

2. Verfahren nach Anspruch 1, gekennzeichnet durch die Verwendung eines Wechselrichters, dessen Wechselspannungsausgänge über je ein steuerbares Element mit jedem der beiden Pole der Gleichspannungsquelle verbunden ist, wobei im Wechsel ständig jeweils ein steuerbares Element eines der Wechselspannungsausgänge für die Dauer eines Sechstelperiodenabschnittes praktisch kurzgeschlossen wird, während die steuerbaren Elemente der beiden anderen Wechselspannungsausgänge zur Erzielung des in der Amplitude veränderbaren sinusförmigen Spannungsverlaufs gesteuert werden.

3. Verfahren nach Anspruch 2, dadurch gekennzeichnet, daß die steuerbaren Elemente als Schalter zur Erzielung einer pulsbreitenmodulation derart betätigt werden, daß sich der sinusförmige Spannungsverlauf an den Wechselspannungsausgängen als Mittelwert der pulsbreitenmodulierten Spannung ergibt.

4. Verfahren nach Anspruch 2 oder 3, gekennzeichnet, durch die Verwendung eines Steuerkreises zur Steuerung der steuerbaren Elemente, der einen Speicher für Funktionswerte der Spannungsverläufe an den Wechselspannungsausgängen aufweist, in dem nur Funktionswerte für $sin (\alpha)$ von 30 bis 90 Grad abgelegt sind.

5. Verfahren nach Anspruch 4, dadurch gekennzeichnet, daß während der Bildung eines Sechstelperiodenabschnittes der Wechselspannungen die Funktionswerte aus dem Speicher schrittweise für $\alpha$ von 30 bis 90 Grad und gleichzeitig oder im schrittweisen Wechsel von 90 bis 30 Grad (entsprechend 90 bis 150 Grad) ausgelesen werden und die beiden auf diese Weise praktisch gleichzeitig zur Verfügung stehenden Funktionswerte über eine Zuordnungslogik zur Steuerung der steuerbaren Elemente verwendet werden.

**Claims**

1. Method of generating a three-phase voltage from a d.c. voltage source by d.c. to a.c. conversion in which, with a phase shift of one-third of a period, each of the three phases is applied alternately to one of the two poles of the d.c. source for a one-sixth-period section and in which, during this time, the other two phases display, in relation to this pole as the reference point, a sinusoidal voltage course offset by 60 degrees from each other, one of the sinusoidal voltages which changes in relation to the relevant fixed reference point increasing from half the amplitude value to the full amplitude value while the other voltage decreases from the full amplitude value to half the amplitude value, characterised in that, in order to reduce the a.c. voltage amplitude, the said amplitude value is regulated to values below the voltage of the d.c. source.

2. Method according to claim 1, characterised by the use of a d.c. to a.c. converter each of whose a.c. voltage outputs is connected, via a controllable element in each case, to each of the two poles of the d.c. source, one controllable element of one of the a.c. voltage outputs being in each case alternately continuously practically short-circuit for the duration of a sixth-period section, while the controllable elements of the other two a.c. voltage outputs are regulated for the purpose of achieving the sinusoidal voltage course which is variable in amplitude.

3. Method according to claim 2, characterised in that the controllable elements are operated in such a way, as switches for the achievement of pulse width modulation, that the sinusoidal voltage course at the a.c. voltage outputs represents the mean value of the pulse-width-modulated voltage.

4. Method according to claim 2 or 3, characterised by the use of a control circuit to control the controllable elements which has a memory for function values of the voltage courses at the a.c. voltage outputs in which only function values for sin $\alpha$ from 30 to 60 degrees are stored.

5. Method according to claim 4, characterised in that, during the formation of a sixth-period section of the a.c. voltages, the function values are read out from the memory step by step for $\alpha$ from 30 to 90 degrees and simultaneously or alternately step by step from 90 to 30 degrees (corresponding to from 90 to 150 degrees) and the two function values thus practically simultaneously available are used to control the controllable elements via an allocation logic.

**Revendications**

1. Procédé pour engendrer une tension triphasée par ondulation à partir d'une source de tension continue, dans lequel, avec un déphasage d'un tiers de période, chacune des trois phases est appliquée à son tour, pedant une tranche d'un sixième de période, à l'un des deux pôles de la source de tension continue et, podant le temps de cette application, les deux autres phases présentent, par rapport à ce pôle pris comme référence, une évolution de tension sinusoïdale avec déphasage mutuel de 60 degrés, l'une des tensions sinusoïdales variant par rapport au point de référence en augmentant de la moitié d'une valeur d'amplitude à une telle valeur d'amplitude, tandis que l'autre tension décroît de ladite valeur d'amplitude à la moitié de cette valeur, caractérisé en ce que, pour réduire la valeur de la tension alternative, la valeur d'amplitude précitée est réglée à des valeurs inférieures à la tension de la source de tension continue.

2. Procédé selon la revendication 1, caractérisé par l'utilisation d'un onduleur dont les sorties de tensions alternatives sont reliées, à chaque fois par un élément commandé, à chacun des deux pôles de la source de tension continue, un élément commandé de l'une des sorties de tensions alternatives étant, à son tour, pratiquement mis en court-circuit pedant toute la durée d'une tranche d'un sixième de période, tandis que les éléments commandés des deux autres sorties de tension alternative sont commandés pour l'obtention d'une évolution de tension sinusoïdale modifiable en amplitude.

3. Procédé selon la revendication 2, caractérisé en ce que les éléments commandés sont, en tant qu'interrupteurs, actionnés pour obtenir une modulation de largeur d'impulsions, de façon telle que l'évolution sinusoïdale de la tension aux sorties de tension alternatives résulte de la valeur moyenne de la tension d'impulsions modulées en largeur.

4. Procédé selon la revendication 2 ou 3, caractérisé par l'utilisation d'un circuit de commande pour commander les éléments commandés, ce circuit de commande présentant une mémoire pour des valeurs de fonction correspondant aux évolutions de tension aux sorties de tensions alternatives, mémoire dans laquelle ne sont mémorisées que des valeurs de fonction relatives à sinus $(\alpha)$ de 30 à 90 degrés.

5. Procédé selon la revendication 4, caractérisé en ce que, pendant le déroulement d'une tranche d'un sixième de période des tensions alternatives, les valeurs de fonction sont lues pas-à-pas dans la mémoire, pour $\alpha$ de 30 à 90 degrés et, en même temps ou en alternat pas-à-pas, de 90 à 30 degrés (correspondant à 90 à 150 degrés), et les deux valeurs de fonction qui, de cette manière, sont pratiquement disponibles en même temps, sont utilisées, par l'intermédiaire d'un logique de distribution, pour la commande des éléments commandés.

Fig.1

Fig.2

Fig.3

Fig.4